# EUROPÄISCHE PATENTSCHRIFT

(11) **EP 0 994 798 B1**
(45) Veröffentlichungstag und Bekanntmachung des Hinweises auf die Patenterteilung: **02.10.2002**
(21) Anmeldenummer: 98931814.2
(22) Anmeldetag: 14.07.1998
(51) Int. Cl.: B62D 29/00, B62D 25/04, B62D 33/03

(54) **SCHARNIEREINRICHTUNG ZUR SCHWENKVERBINDUNG VON FAHRZEUGAUFBAUTEILEN**
HINGE DEVICE FOR SWIVELLING ASSEMBLY OF MOUNTING ELEMENTS FOR VEHICLES
SYSTEME DE CHARNIERE POUR ASSEMBLAGE PIVOTANT D'ELEMENTS DE MONTAGE POUR VEHICULES

(30) Priorität: 14.07.1997 AT 120197
(43) Veröffentlichungstag der Anmeldung: 26.04.2000
(73) Patentinhaber: WEBER, Gisela, A-2474 Gattendorf (AT)
(72) Erfinder: WEBER, Gisela, A-2474 Gattendorf (AT)
(74) Vertreter: Holzer, Walter, Dipl.-Ing.
(86) Internationale Anmeldenummer: AT9800170
(87) Internationale Veröffentlichungsnummer: WO99003717

(56) Entgegenhaltungen:
- WO-A-94/20714
- FR-A- 2 129 401
- US-A- 3 646 636
- US-A- 4 460 030
- US-A- 5 107 639

## Beschreibung

Die Erfindung betrifft eine Scharniereinrichtung zur Schwenkverbindung von relativ zueinander schwenkbaren Fahrzeugaufbauteilen, insbesondere von Teilen eines Fahrzeugplateaus.

Bei der Konstruktion von Fahrzeugaufbauten, insbesondere Fahrzeugplateaus, Ladebordwänden usw. werden aus Gewichtsgründen in zunehmendem Maße stranggepreßte Hohlprofile aus Aluminium verwendet, die schwenk- bzw. klappbar miteinander verbundene Aufbauteile umfassen. Hiezu ist es bisher erforderlich, an den Hohlprofilen Lagerflansche, Scharniere od.dgl. mit zylindrischen Aufnahmen für die Schwenkachse bzw. Schwenkbolzen mittels Schrauben zu befestigen. Diese Maßnahme stellt einen nicht unbeträchtlichen zusätzlichen Arbeits- und Materialaufwand dar.

Die Erfindung zielt deshalb darauf ab, eine Scharniereinrichtung zu schaffen, die eine einfache, im wesentlichen modulartige Montage von Schwenkscharnieren ohne das Erfordernis von Schraubbefestigungen u.dgl. ermöglicht. Die erfindungsgemäße Scharniereinrichtung zeichnet sich dadurch aus, daß die zu verbindenden Aufbauteile, die vorzugsweise aus Strangguß-Hohlprofilen aus Aluminium bestehen, in einander zugekehrten, gegensinnig schräg verlaufenden Stirnwänden je eine T-förmig hinterschnittene Längsnut aufweisen, in welche von den Nutenenden her je zumindest ein Lagerteil mit zum Nutquerschnitt korrespondierenden Ansätzen und mit einer zylindrischen Aufnahme für eine Scharnierachse einschiebbar ist, wobei die Lagerteile mit zumindest einem, zwischen den Aufbauteilen angeordneten einstückigen hohlen Schwenkprofil zusammenwirken, welches zu den schrägen Stirnwänden der Aufbauteile korrespondierende Schrägwände und im Bereich der zylindrischen Aufnahmen der Lagerteile zwei teilzylindrische Aufnahmen aufweist, durch welche die die Lagerteilaufnahmen durchsetzenden Scharnierachsen hindurch schiebbar sind, so daß einer oder beide Aufbauteile um 90° oder einer der Aufbauteile relativ zum anderen um 180° schwenkbar ist.

Durch die erfindungsgemäße Konstruktion können in die Längsnuten der einander zugekehrten Schrägwände der Aufbauteile, insbesondere Hohlprofile, von den Nutenden her der Reihe nach die erforderliche Anzahl von Lagerteilen und Schwenkprofilen bzw. auch zusätzliche Abstandhalter eingeschoben werden, bis die Längsnuten über ihre gesamte Länge gefüllt sind. Die den Nutenden benachbarten Teile werden dann z.B. durch Klemmschrauben, durch Stifte, durch Klebung usw. festgelegt. Danach können in die fluchtenden Aufnahmen der Lagerteile und der Schwenkprofile die Scharnierachsen bzw. -bolzen eingesteckt werden.

Vorzugsweise weisen die schräge Stirnwand der zu verbindenden Aufbauteile und das Schwenkprofil Anschläge auf, die in der 90°-Schwenkstellung der Aufbauteile stirnseitig aufeinanderstoßen. Auf diese Weise wird eine einwandfreie Schwenkbewegung und Schwenkstellung der Fahrzeugaufbauteile relativ zueinander und insbesondere die Schwenkbewegung um 180° sichergestellt. Nach einem weiteren Merkmal der Erfindung sind über die Länge der zu verbindenden Aufbauteile in den Längsnuten mehrere Lagerteile vorgesehen, die durch Schwenkprofile und vorzugsweise durch Distanzstücke im Abstand gehalten sind.

Im Rahmen der Erfindung wird das Schwenkprofil symmetrisch ausgebildet und weist eine untere, von seinen Schrägwänden und einer unteren Querwand begrenzte Kammer sowie obere parallele teilzylindrische Aufnahmen auf, die an ihrer Oberseite die Anschläge für die Schwenkbegrenzung tragen.

Weitere Merkmale der Erfindung werden nachfolgend an einem Ausführungsbeispiel unter Bezugnahme auf die Zeichnungen näher erläutert. Es zeigen:
Fig. 1 eine geschnittene perspektivische Darstellung der Scharnieranordnung eines Fahrzeugplateaus und
Fig. 2 ein Schwenkprofil in Stirnansicht.

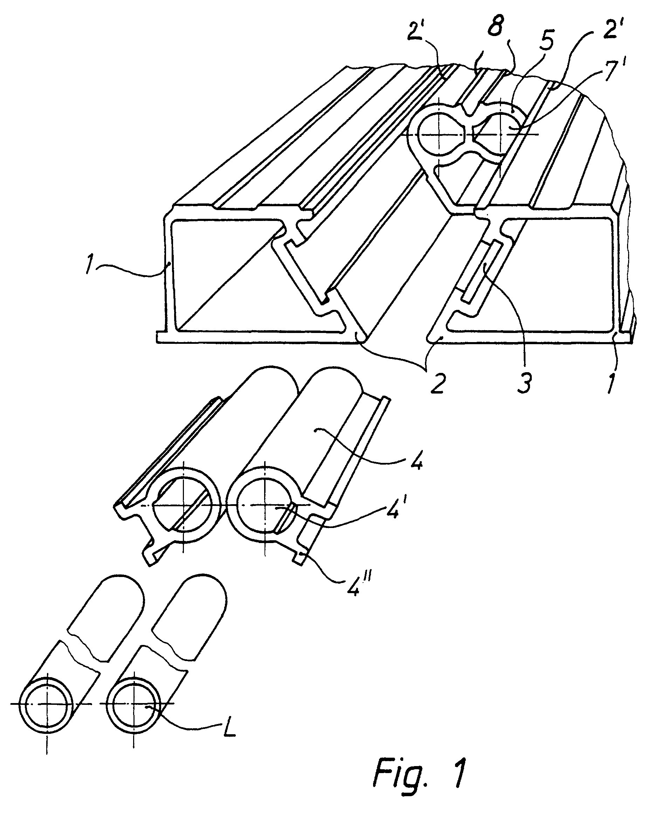

Fig. 1 zeigt zwei Aufbauteile 1 eines Fahrzeugplateaus, das aus stranggepreßten Aluminium-Hohlprofilen besteht. In den einander mit gegenseitigem Abstand zugekehrten, gegensinnig geneigten schrägen Stirnwänden 2 der Aufbauteile 1, die mit nicht gezeigten weiteren Hohlprofilen das Plateau bilden, sind je eine T-förmig hinterschnittene Längsnut 3 zum Einschieben von Lagerteilen 4 von den Nutenden her ausgebildet. Die Lagerteile 4 haben eine zylindrische Aufnahme 4' für eine Scharnierachse L und Ansätze 4", welche der Längsnut 3 entsprechen.

Es werden jeweils so viele Lagerteile 4 in die Längsnuten 3 eingeschoben, wie erforderlich. Die Festlegung der Lagerteile 4 relativ zueinander erfolgt über die Nutenlänge durch Distanzstücke, die in die Längsnuten eingeführt werden, von denen zumindest eines zugleich ein Schwenkprofil 5 bildet. Die an den Längsnutenden liegenden Teile werden durch nicht gezeigte Verschlüsse, z.B. Spannschrauben oder Stifte oder durch Klebung festgelegt. Es können außer den Schwenkprofilen 5 auch andere Distanzstücke vorgesehen werden.

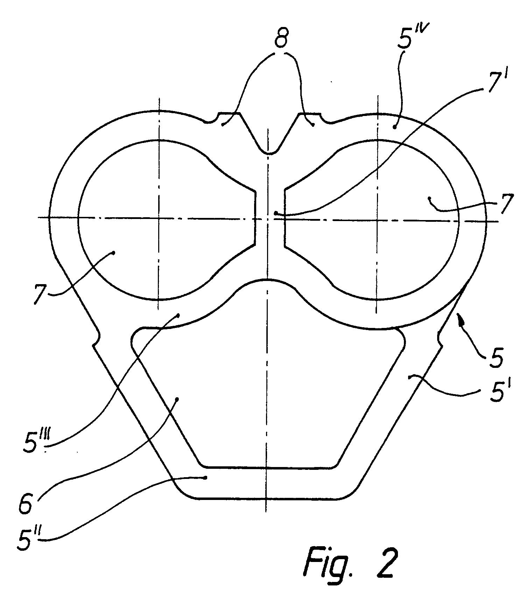

Fig. 2 zeigt eine Stirnansicht des Schwenkprofiles 5. Das Schwenkprofil 5 ist symmetrisch ausgebildet und weist zu den im wesentlichen V-förmig angeordneten schrägen Stirnwänden 2 der Aufbauteile 1 korrespondierende Schrägwände 5' auf. Das Schwenkprofil 5 hat eine untere, von den Schrägwänden 5' und einer unteren Querwand 5" sowie einer mittleren Querwand 5"' gebildete untere Kammer 6 sowie zwei von der mittleren Querwand 5"' und einer oberen Wand 5^{IV} sowie einem Profilstrang 7' gebildete teilzylindrische Aufnahmen 7 für die Scharnierachse L, welche durch die fluchtenden Aufnahmen 4' und 7 der Lagerteile 4 und der Schwenkprofile 5 gesteckt wird.

Auf der oberen Querwand 5^{IV} sind zwei symmetrische Anschläge 8 vorgesehen, die miteinander ebenfalls ein V einschließen. Die gezeigte Konstruktion kommt ohne jegliche Schraubbefestigung der Lagerteile und Schwenkprofile an den Aufbauteil-Hohlprofilen aus.

Im Betrieb können bei Bedarf einer oder beide Plateauteile relativ zueinander um 90° geschwenkt werden, oder es kann einer der Teile um 180° geschwenkt werden. In der 90°-Schwenkstellung kommen Anschläge 2' an den oberen Enden der Schrägwände 2 der Aufbauteile 1 mit den Anschlägen 8 des Schwenkprofiles 5 stirnseitig in Eingriff. Dadurch wird auch die einwandfreie 180°-Schwenkung sichergestellt.

Die Erfindung eignet sich für alle relativ zueinander schwenkbaren Teile eines Fahrzeugaufbaus.

## Patentansprüche

1. Scharniereinrichtung zur Schwenkverbindung von relativ zueinander schwenkbaren Fahrzeugaufbauteilen (1), insbesondere von Teilen eines Fahrzeugplateaus, **dadurch gekennzeichnet, daß** die zu verbindenden Aufbauteile (1), die vorzugsweise aus Strangpreß-Hohlprofilen aus Aluminium bestehen, in einander zugekehrten, gegensinnig schräg verlaufenden Stirnwänden (2) je eine T-förmig hinterschnittene Längsnut (3) aufweisen, in welche von den Nutenden her je zumindest ein Lagerteil (4) mit zum Nutquerschnitt korrespondierenden Ansätzen (4") und mit einer zylindrischen Aufnahme (4') für eine Scharnierachse (L) einschiebbar ist, wobei die Lagerteile (4) mit zumindest einem, zwischen den Aufbauteilen (1) angeordneten einstückigen hohlen Schwenkprofil (5) zusammenwirken, welches zu den schrägen Stirnwänden (2) der Aufbauauteile (1) korrespondierende Schrägwände (5') und im Bereich der zylindrischen Aufnahmen der Lagerteile (4) zwei teilzylindrische Aufnahmen (7) aufweist, durch welche die die Lagerteilaufnahmen (4') durchsetzenden Scharnierachsen (L) hindurch schiebbar sind, so daß einer oder beide Aufbauteile (1) um 90° oder einer der Aufbauteile relativ zum anderen um 180° schwenkbar ist.

2. Einrichtung nach Anspruch 1, **dadurch gekennzeichnet, daß** die schräge Stirnwand (2) der zu verbindenden Aufbauteile (1) und das Schwenkprofil (5) je einen Anschlag (2', 8) aufweisen, die in der 90°-Schwenkstellung stirnseitig aufeinanderstoßen.

3. Einrichtung nach Anspruch 1 oder 2, **dadurch gekennzeichnet, daß** über die Länge der zu verbindenden Aufbauteile (1) in den Längsnuten (3) mehrere Lagerteile (4) vorgesehen sind, die durch Schwenkprofile (5) und vorzugsweise durch Distanzstücke im Abstand gehalten sind.

4. Einrichtung nach einem der Ansprüche 1 bis 3, **dadurch gekennzeichnet, daß** das Schwenkprofil (5) symmetrisch ausgebildet ist und eine untere, von seinen Schrägwänden (5') und einer unteren Querwand (5") begrenzte Kammer (6) sowie obere parallele teilzylindrische Aufnahmen (7) aufweist, die an ihrer Oberseite die Anschläge (8) für die Schwenkbegrenzung tragen.

## Claims

1. Hinge device for swivelling assembly of vehicle mounting elements (1) swivelling relative to one another, in particular of elements of a vehicle plateau, **characterised in that** the mounting elements (1) to be assembled, preferably consisting of extruded hollow sections made of aluminium, each have a T-shaped undercut longitudinal groove (3) in front walls (2) facing one another and extending obliquely in opposite directions, in which longitudinal groove (3) at least one respective bearing part (4) with shoulders (4'') corresponding with the groove cross-section and with a cylindrical receptacle (4') for a hinge axis (L) can be inserted from the groove ends, the bearing parts (4) cooperating with at least one integral, hollow swivelling section (5) arranged between the mounting elements (1), the swivelling section (5) comprising oblique walls (5') corresponding with the oblique front walls (2) of the mounting elements (1) and two partially cylindrical receptacles (7) in the region of the cylindrical receptacles of the bearing parts (4), through which the hinge axes (L) penetrating the bearing part receptacles (4') can be pushed so one or both mounting element(s) (1) can be swivelled about 90° or one of the mounting elements can be swivelled relative to the other about 180°.

2. Device according to claim 1, **characterised in that** the oblique front wall (2) of the mounting elements (1) to be assembled and the swivelling section (5) each have a stop (2', 8) which abut one another at the front end in the 90° swivel position.

3. Device according to claim 1 or 2, **characterised in that** a plurality of bearing parts (4) are provided in the longitudinal grooves (3) over the length of the mounting elements (1) to be assembled, the bearing parts (4) being held at a distance by swivelling sections (5) and preferably by spacers.

4. Device according to any of claims 1 to 3, **characterised in that** the swivelling section (5) is symmetrically designed and comprises a lower chamber (6) limited by its oblique walls (5') and a lower transverse wall (5'') and upper parallel partially cylindrical receptacles (7) carrying the stops (8) for the swivel limit on their upper side.

## Revendications

1. Dispositif de charnière pour relier avec possibilité de pivotement des composants de montage (1) d'un véhicule automobile, pouvant pivoter l'un par rapport à l'autre, notamment de pièces d'un plateau de véhicule, **caractérisé en ce que** les composants de montage (1) à réunir, qui sont constitués de préférence par des profilés creux extrudés en aluminium, possèdent dans des faces frontales (2), qui sont tournées l'une vers l'autre et sont disposées obliquement en des sens opposés, respectivement une rainure longitudinale (3) formée en contre-dépouille en forme de T, dans laquelle respectivement au moins un élément de palier (4) comportant des appendices saillants (4") correspondant à la section transversale de la rainure, et un logement cylindrique (4') pour un axe de charnière (L) peut être inséré à partir des extrémités de la rainure, les éléments de palier (4) coopérant avec au moins un profilé pivotant creux monobloc (5) monté entre les composants de montage (1) et qui comporte des parois obliques (5') qui correspondent aux parois frontales obliques (2) des composants de montage (1) et, dans la zone des logements cylindriques des éléments de palier (4), comportent deux logements partiellement cylindriques (7), au moyen desquels les axes de charnières (L), qui traversent les logements (4') des éléments de palier, peuvent être repoussés de sorte qu'un ou deux composants de montage (1) peuvent pivoter de 90° ou que l'un des composants de montage peut pivoter par rapport à l'autre sur 180°.

2. Dispositif selon la revendication 1, **caractérisé en ce que** la paroi frontale oblique (2) des composants de montage (1) devant être réunis et le profilé pivotant (5) comportent des butées respectives (2',8), qui sont en aboutement frontalement dans la position pivotée de 90°.

3. Dispositif selon la revendication 1 ou 2, **caractérisé en ce que** sur la longueur des composants de montage (1) devant être réunis, sont prévues, et ce dans les rainures longitudinales (3), plusieurs parties de palier (3), qui sont maintenues à distance par des profilés pivotants (5) et de préférence par des entretoises.

4. Dispositif selon l'une des revendications 1 à 3, **caractérisé en ce que** le profilé pivotant (5) possède un agencement symétrique et comporte une chambre inférieure (6), délimitée par ses parois obliques (5') et par une paroi transversale inférieure (5"), ainsi que des logements parallèles supérieurs (7) partiellement cylindriques, qui portent, sur leurs côtés supérieurs, les butées (8) pour une limitation du pivotement.
